# EUROPEAN PATENT SPECIFICATION

(11) **EP 4 331 950 B1**
(45) Date of publication and mention of the grant of the patent: **16.09.2026**
(21) Application number: 23169084.3
(22) Date of filing: 20.04.2023
(51) Int. Cl.: B62D 15/02, B60R 1/00

(54) **AUTOMATIC PARKING ASSISTANCE SYSTEM**
AUTOMATISCHES EINPARKASSISTENZSYSTEM
SYSTÈME D'AIDE AU STATIONNEMENT AUTOMATIQUE

(30) Priority: 21.07.2022 JP 2022116104
(43) Date of publication of application: 06.03.2024
(73) Proprietor: Suzuki Motor Corporation, Hamamatsu-shi, Shizuoka 432-8611 (JP)
(72) Inventor: OHYAMA, Ryouhei, HAMAMATSU-SHI, 432-8611 (JP)
(74) Representative: Plasseraud IP

(56) References cited:
- JP-A- 2010 215 027
- JP-B2- 5 872 517

## Description

### BACKGROUND OF THE INVENTION

### Field of the Invention

The present invention relates to an automatic parking assistance system for a vehicle having an autonomous driving function.

### Description of the Related Art

Conventionally, automatic parking is known as one form of autonomous driving of a vehicle. In the automatic parking, parking operation, monitoring of the surroundings of the vehicle, or avoidance of a collision accident is automatically performed instead of by a driver.

When the driver operates a steering device and a shift lever in the automatic parking, an image of the surroundings of the vehicle is displayed on a monitor in the vehicle interior on the basis of images obtained by a vehicle-mounted camera. The state of the automatic parking can be checked by a person in the vehicle like the driver (hereinafter collectively referred to as a user) with the monitor in real time. Document JP 2010 215027 discloses a driving assistance device displays multiple images simultaneously. One of the display areas is increased when a steering wheel turning angle is increased.

As to the above-described display of the surroundings, in a recent technique, a surrounding image in the traveling direction including a specific region having an obstacle is combined with another surrounding image in the traveling direction so as to be displayed as a combined image on a monitor in the case where the obstacle is detected. In this manner, in the automatic parking, it is important for the user to be able to grasp the relative positional relationship between the vehicle, the obstacle, and the parking position when the vehicle approaches the parking position.

As an image display control technique of using a wide-angle image (panoramic image) generated by combining several images, the technique disclosed in Japanese Unexamined Patent Application Publication No. 2016-097896 allows the user to more appropriately grasp the surrounding situation from the provided image. However, in the above-described conventional technique, when there are many obstacles, there is a possibility of frequent switching of the display screen. The frequent switching of the display screen may be inconvenient and uncomfortable to the user. For example, in the case of repeatedly reversing the traveling direction in the automatic parking, once the vehicle moves sufficiently away from the obstacle, the display screen switches, and the display screen switches again when the vehicle approaches the obstacle again.

### SUMMARY OF THE INVENTION

An object of the present invention is to provide an automatic parking assistance system that displays a surrounding image in a timely and appropriate display mode enabling reduction in switching frequency.

An automatic parking assistance system according to claim 1 includes a traveling-direction display unit, a BEV-image display unit, a condition holding unit, and an area adjustment unit. The traveling-direction display unit is configured to display a traveling-direction image in a traveling-direction display area on a monitor inside a vehicle having an autonomous driving function during automatic parking of the vehicle (200). The traveling-direction image is a scenic image captured in a traveling direction of the vehicle. The BEV-image display unit is configured to display a Bird's-Eye View image in a BEV-display area on the monitor. The BEV image is an image obtained by imaging surroundings of the vehicle and depicts the surrounding including the vehicle itself as viewed from above. The condition holding unit is configured to hold an obstacle proximity condition and a section proximity condition. The obstacle proximity condition defines that distance between the vehicle and an obstacle is equal to or shorter than predetermined first distance during the automatic parking. The section proximity condition defines that distance between the vehicle and a parking section of a parking position scheduled at a time of the automatic parking is equal to or shorter than predetermined second distance. The area adjustment unit is configured to switch display on the monitor between a BEV priority mode and a traveling-direction priority mode by adjusting size of each of the traveling-direction display area and the BEV-display area. The BEV priority mode is a mode in which the BEV-display area is wider than the traveling-direction display area. The traveling-direction priority mode is a mode in which the traveling-direction display area is wider than the BEV-display area. The area adjustment unit switch the display on the monitor from the BEV priority mode to the traveling-direction priority mode when at least one of the obstacle proximity condition and the section proximity condition is satisfied.

### Effect of the Invention

According to the present invention, an automatic parking assistance system that displays a surrounding image in a timely and appropriate display mode enabling reduction in switching frequency will be provided.

### BRIEF DESCRIPTION OF THE DRAWINGS

In the accompanying drawings:
Fig. 1 is a block diagram illustrating a configuration of a vehicle to which an automatic parking system according to the first embodiment of the present invention is applied;
Fig. 2A is a schematic diagram illustrating an actual detection range of each ultrasonic sensor;
Fig. 2B is a schematic diagram illustrating a rough detection range obtained by integrating the detection ranges of the respective ultrasonic sensors;
Fig. 3 is a schematic diagram illustrating a monitor screen;
Fig. 4A and Fig. 4B are schematic diagrams illustrating an aspect of switching from a BEV priority mode to a traveling-direction priority mode;
Fig. 5A and Fig. 5B are schematic diagrams illustrating another aspect of switching from the BEV priority mode to the traveling-direction priority mode;
Fig. 6A and Fig. 6B are schematic diagrams illustrating still another aspect of switching from the BEV priority mode to the traveling-direction priority mode;
Fig. 7 is a flowchart of operation by an automatic parking assistance method according to the first embodiment;
Fig. 8 is a flowchart of operation by the automatic parking assistance method according to the second embodiment; and
Fig. 9 is a flowchart of operation by the automatic parking assistance method according to the third embodiment.

### DETAILED DESCRIPTION

Hereinbelow, embodiments of the present invention will be described by referring to the accompanying drawings.

### (First Embodiment)

### <1. Related Devices of Automatic Parking System 100>

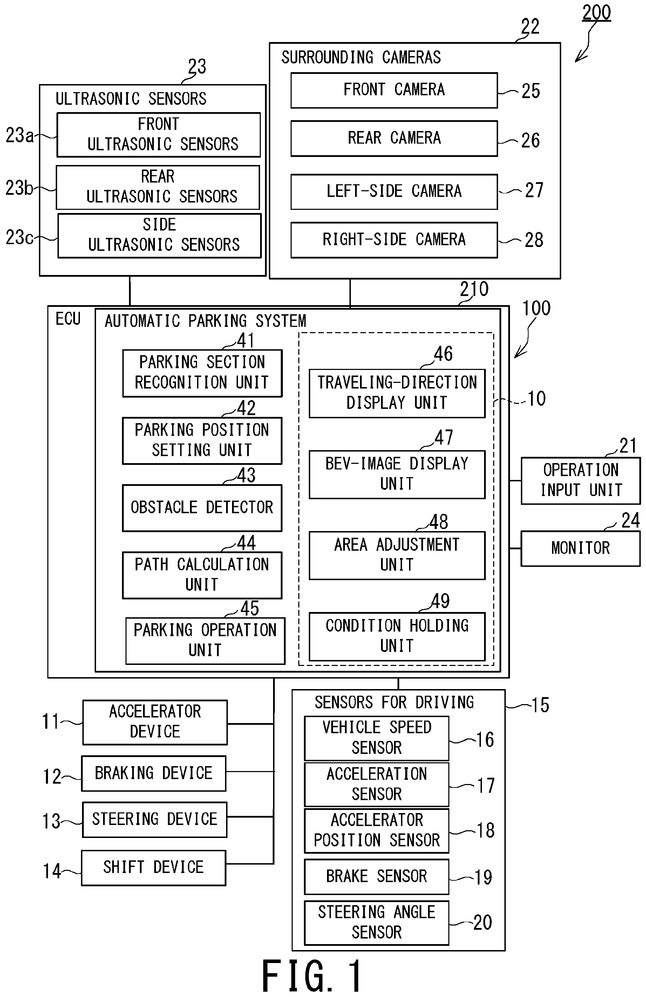

First, relationship between an automatic parking system 100 (hereinafter simply referred to as "the parking system 100") and related devices in a vehicle 200 will be described by referring to Fig. 1.

Fig. 1 is a block diagram illustrating the configuration of the vehicle 200 to which the parking system 100 according to the first embodiment of the present invention is applied.

The parking system 100 is a computer including hardware components such as a CPU, a RAM, and a ROM, and is mounted on an ECU (Electronic Control Unit) 210 of the vehicle 200, for example.

As shown in Fig. 1, the parking system 100 is communicably connected to each of an accelerator device 11, a braking device 12, a steering device 13, and a shift device 14 that are provided for driving the vehicle 200, and controls these driving-system components 11 to 14.

The parking system 100 is also communicably connected to sensors for driving 15 (16 to 20), an operation input unit 21, surrounding cameras 22, ultrasonic sensors 23, and a monitor 24.

The sensors 15 are composed of, for example, a vehicle speed sensor 16, an acceleration sensor 17, an accelerator position sensor 18, a brake sensor 19, and a steering angle sensor 20. The parking system 100 detects the running state of the vehicle 200 and controls the driving-system components 11 to 14 on the basis of information acquired from the sensors 15.

The operation input unit 21 is, for example, a set of buttons including: an operation selection button for selecting the next operation of the vehicle 200; and an automatic parking button that receives an instruction to start the automatic parking from a user such as a driver and a passenger on the assistant driver's seat. The operation input unit 21 may be a set of hardware switches or icons on a touch panel constituting the screen of the monitor 24. When the automatic parking button is pressed, the automatic parking is started.

The surrounding cameras 22 are composed of several imaging cameras mounted on the vehicle 200, which include: a rear camera 26 attached to the rear end of the vehicle 200; a front camera 25 attached to the front end of the vehicle 200; a left side camera 27 attached to a left side mirror; and a right side camera 28 attached to a right side mirror, for example.

Each of the cameras 25 to 28 of the surrounding cameras 22 acquires digitized images of the surroundings of the vehicle 200 with an optical lens and an image sensor.

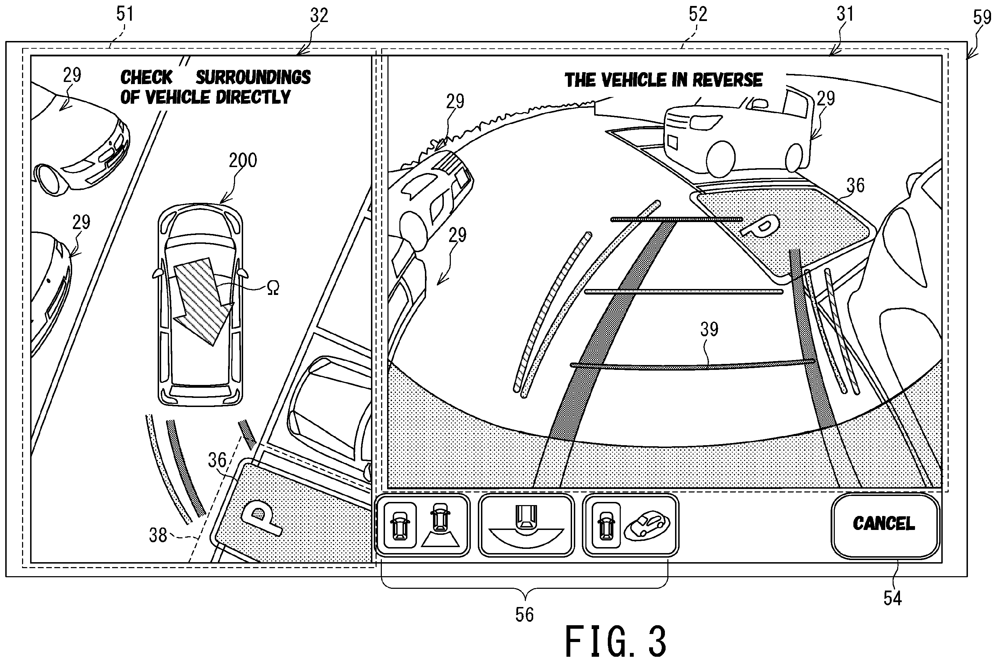

The ultrasonic sensors 23 are also called parking sensors. During the automatic parking, each of the ultrasonic sensors 23 transmits an ultrasonic wave and then detects the reflected ultrasonic wave so as to identify a direction of at least one obstacle 29 and distance to the obstacle 29 (Fig. 3), for example. The ultrasonic sensors 23 are composed of: front ultrasonic sensors 23a that are provided on the front portion of the vehicle 200 and transmit ultrasonic waves forward; rear ultrasonic sensors 23b that are provided on the rear portion of the vehicle 200 and transmit ultrasonic waves rearward; and side ultrasonic sensors 23c that are provided on the side of the vehicle 200 and transmit ultrasonic waves to the side.

The respective front ultrasonic sensors 23a are installed at several locations on the front portion of the vehicle 200.

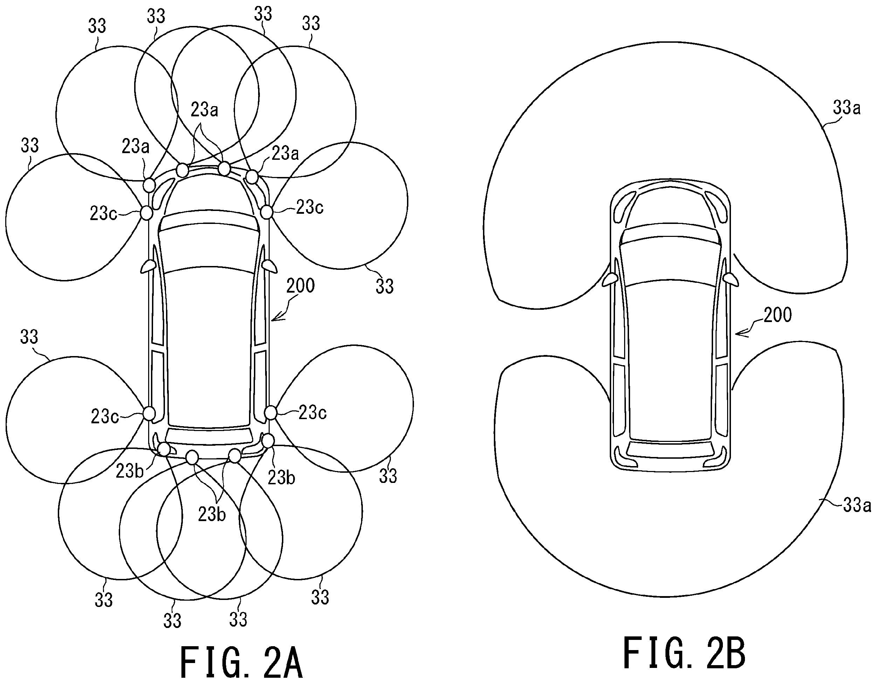

Fig. 2A illustrates the actual detection range 33 of each of the ultrasonic sensors 23a to 23c. Fig. 2B illustrates an outline 33a of detection range obtained by integrating the respective detection ranges of the ultrasonic sensors 23a to 23c.

As shown in Fig. 2A, the front ultrasonic sensors 23a have characteristics that the detection distance is long in the transmission direction of the ultrasonic wave from the installation position of each front ultrasonic sensor 23a and is short in the direction orthogonal to this transmission direction. The detection range 33a of all these front ultrasonic sensors 23a is the integration of the respective detection ranges 33 of these front ultrasonic sensors 23a, as shown in Fig. 2B. The detection range 33 of these front ultrasonic sensors 23a overlaps the detection range 33 of the side ultrasonic sensors 23c. As a result, the detection range 33a in front of the vehicle 200 by the ultrasonic sensors 23a and 23c has approximately a fan shape centered at the front portion of the vehicle 200.

The same holds true for the rear ultrasonic sensors 23b. In other words, the detection range 33a of all the rear ultrasonic sensors 23b is the integration of the detection ranges 33 of the respective rear ultrasonic sensors 23b that are provided at several positions on the rear portion of the vehicle 200. The detection range 33 of these rear ultrasonic sensor 23b overlaps the detection range 33 of the side ultrasonic sensors 23c. As a result, the detection range 33a in the rear of the vehicle 200 by the ultrasonic sensors 23b and 23c has approximately a fan shape centered at the rear portion of the vehicle 200.

The monitor 24 is installed on an instrument panel and between the driver's seat and the passenger's seat, for example. The monitor 24 displays a screen such as a car navigation screen and a music playback screen in response to user's operation except during the automatic parking. During the automatic parking, the monitor 24 displays an image depicting the state of the surrounding imaged by the surrounding cameras 22, as described below in detail.

Note that the monitor 24 may be a touch panel that receives user's operation as the operation input unit 21.

### <2. Parking System 100 and Automatic Parking Assistance System 10>

Next, the parking system 100 will be described by referring to Fig. 3 in addition to Fig. 1.

Fig. 3 illustrates a monitor screen 59 to be displayed on the monitor 24.

The parking system 100 includes: a parking section recognition unit 41; a parking position setting unit 42; an obstacle detector 43; a path calculation unit 44; and a parking operation unit 45.

The parking system 100 further includes: a traveling-direction display unit 46; a BEV (Bird's-Eye View)-image display unit 47; an area adjustment unit 48; and a condition holding unit 49. These units 46 to 49 constitute an automatic parking assistance system 10 (hereinafter simply referred to as the assistance system 10). The parking system 100 automatically or semi-automatically parks the vehicle 200 at a desired parking position 36 by exerting the functions of the internal components 41 to 49.

The functions of the internal components 41 to 48 of the parking system 100 are executed by causing the CPU to execute arithmetic processing on the basis of predetermined programs. The condition holding unit 49 is configured of a RAM or a ROM.

As shown in Fig. 3, the parking section recognition unit 41 recognizes a parking section 38 for the vehicle 200 when the operation input unit 21 outputs a parking instruction in response to operation by the user such as the driver. The parking section recognition unit 41 recognizes the parking section 38 on the basis of at least one of: white lines on the ground; and inter-vehicle distance from another parked vehicle, both of which are shown in the surrounding images acquired by the surrounding cameras 22, for example.

The parking position setting unit 42 sets the parking position 36 of the vehicle 200 on the basis of the parking section 38.

The obstacle detector 43 detects the obstacle 29 around the vehicle 200 by using, for example, the ultrasonic sensors 23.

The path calculation unit 44 calculates the path to park the vehicle 200 at the parking position 36. This path includes a turn-back point in the traveling direction Ω of the vehicle 200 and a turn-back path. In addition, the path calculation unit 44 corrects the path to park the vehicle 200 when the position of the obstacle 29 is updated or newly obtained from the obstacle detector 43 during the automatic parking.

The parking operation unit 45 operates the accelerator device 11, the steering device 13, the braking device 12, and the shift device 14 to drive the vehicle 200 in such a manner that the vehicle 200 follows the calculated path and is parked at the parking position 36. On the other hand, in the case of semi-automatic parking in which the driver manually changes the shift position of the shift device 14, the shift device 14 may not be controlled by the parking system 100. Further, even during the automatic parking, the driver can activate the braking device 12 to forcibly stop the vehicle 200.

The assistance system 10 as a whole timely displays a traveling-direction image 31 and a BEV (Bird's-Eye View) image 32 in the respective allocated areas 51 and 52 on the monitor screen 59. In the present specification, the BEV image means an image that is obtained by imaging the surroundings of the vehicle 200 and depicts the surrounding including the vehicle 200 as viewed from above.

The assistance system 10 is composed of the traveling-direction display unit 46, and the BEV-image display unit 47, the area adjustment unit 48, and the condition holding unit 49.

Next, each configuration of the assistance system 10 will be described.

The condition holding unit 49 holds an obstacle proximity condition and a section proximity condition.

The obstacle proximity condition means that the distance between the vehicle 200 and the obstacle 29 is equal to or shorter than predetermined first distance during the automatic parking (i.e., during parking operation by the parking operation unit 45). The first distance is set in the range of about 0.5 to 1.5 meters from the center of the vehicle 200 to be included in the detection range 33 of the ultrasonic sensors 23, for example. The first distance is not a single distance from the vehicle 200 but is various distance between: the front end or rear end of the vehicle 200; and a fan-shaped line drawn from the front end or rear end of the vehicle 200 as shown in Fig. 2A and Fig. 2B.

The section proximity condition is that the distance between the vehicle 200 and the parking section 38 at the parking position 36 becomes equal to or shorter than predetermined second distance during the automatic parking. The second distance is, for example, about 2 meters from the center of the vehicle 200. In other words, each of the obstacle proximity condition and the section proximity condition defines a situation in which the surroundings of the vehicle 200 should be checked by the user in more detail.

The traveling-direction display unit 46 displays the traveling-direction image 31 on the monitor 24, which is a scenic image obtained by imaging the travelling direction of the vehicle 200, in the traveling-direction display area 52 as shown in Fig. 3.

The traveling-direction display unit 46 first combines several images, which are images of either the front exterior or the rear exterior of the vehicle 200 simultaneously acquired by the several cameras 25 to 28, into one combined image. The traveling-direction display unit 46 performs distortion correction, size-enlargement/size-reduction, and segmenting (i.e., partial extraction) on this combined image to generate the traveling-direction image 31, and displays the traveling-direction image 31 on the monitor 24. When the vehicle 200 is moving forward, the traveling-direction display unit 46 treats the surrounding images, which are captured by the front camera 25 and the left and right side cameras 27 and 28 and depict the front exterior of the vehicle 200, as the traveling-direction image 31. When the vehicle 200 is moving backward, the traveling-direction display unit 46 treats the surrounding images, which are captured by the rear camera 26 and the left and right side cameras 27 and 28 and depict the rear exterior of the vehicle 200, as the traveling-direction image 31.

In the traveling-direction image 31, objects in the traveling direction are depicted in enlarged size as compared with the BEV image 32 described below. Thus, the display of the traveling-direction image 31 is effective when detailed understanding of the position of the obstacle 29 and/or the parking position 36 in the traveling direction is required.

Below the traveling-direction display area 52 on the monitor screen 59, several switching buttons 56 for switching the display mode between the traveling-direction image 31 and the BEV image 32 on the monitor screen 59 are displayed as touch panel icons. Alongside the switching buttons 56, a cancel button 54 for canceling the display mode selected by the switching button(s) 56 is also displayed as an icon.

As shown in Fig. 3, the BEV-image display unit 47 displays the BEV image 32, which depicts the surroundings of the vehicle 200 including the vehicle 200 as viewed from above, in the BEV-display area 51 on the monitor screen 59. The BEV-display area 51 is, for example, adjacent to the right or left of the traveling-direction display area 52 on the monitor screen 59. In other words, the traveling-direction image 31 and the BEV image 32 are displayed side by side in the horizontal direction. Note that the respective display positions of the traveling-direction image 31 and the BEV image 32 on the monitor screen 59 are not limited to the above-described aspect.

The BEV-image display unit 47 generates a combined image from respective images that are generated by causing the front camera 25, the rear camera 26, the left side camera 27, and the right side camera 28 to simultaneously image the surroundings of the vehicle 200. Further, the BEV-image display unit 47 performs distortion correction, size-enlargement/size-reduction, and segmenting on this combined image. On the basis of this combined image, the BEV-image display unit 47 generates the BEV image 32 that depicts the surroundings of the vehicle 200 as viewed from above. The field of view of the BEV image 32 is set in such a manner that the length from the front and rear edges of the vehicle 200 to the front and rear edges of the field of view is about 1.5 to 2 times the length of the vehicle, for example. The user of the vehicle 200 can grasp the state of the surroundings of the vehicle 200 almost in real time from the traveling-direction image 31 and the BEV image 32 displayed in this manner.

The area adjustment unit 48 adjusts the size of each of the traveling-direction display area 52 and the BEV-display area 51 so as to switch the display mode between the BEV priority mode and the traveling-direction priority mode.

The BEV priority mode is a screen layout in which the BEV-display area 51 allocated to display the BEV image 32 is wider than the traveling-direction display area 52 allocated to display the traveling-direction image 31. The BEV priority mode includes a screen layout in which the monitor screen 59 is composed only of the BEV-display area 51.

The traveling-direction priority mode is a screen layout in which the traveling-direction display area 52 is wider than the BEV-display area 51. The traveling-direction priority mode includes a screen layout in which the monitor screen 59 is composed only of the traveling-direction display area 52, similarly.

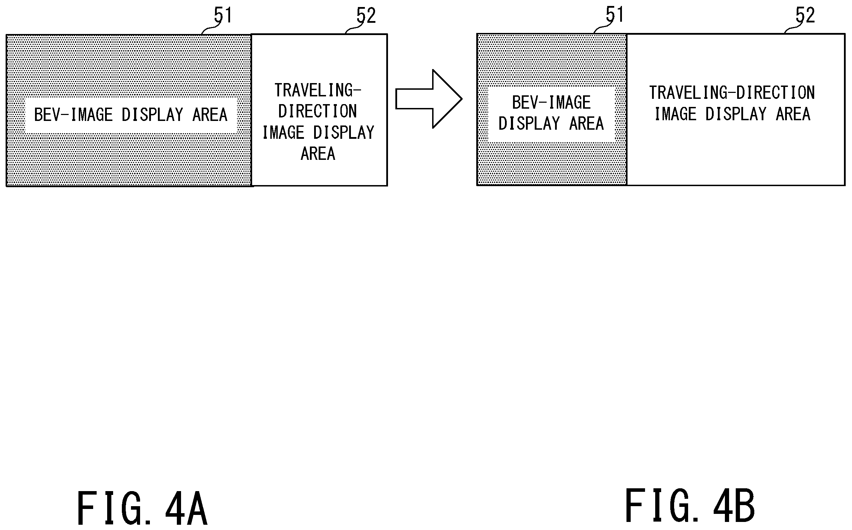

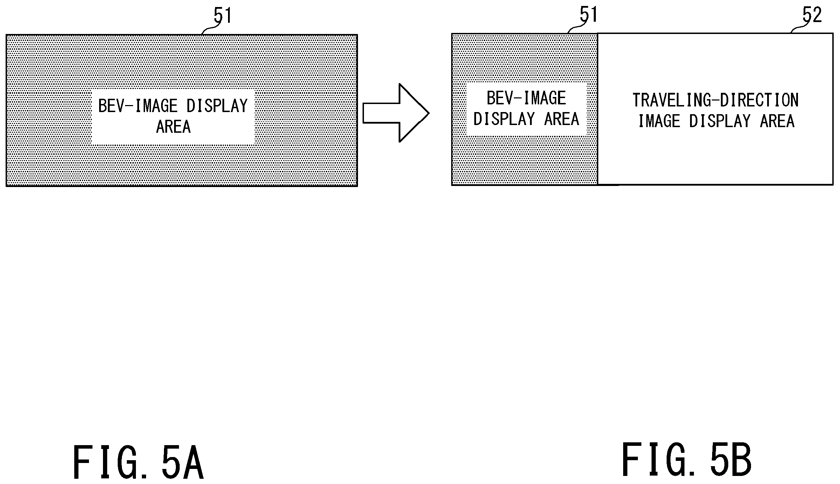

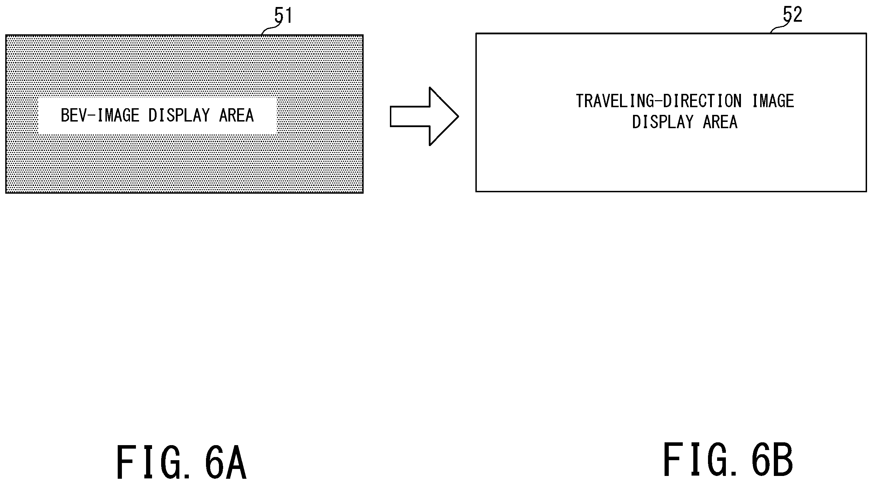

Fig. 4A and Fig. 4B illustrate a switching pattern of a screen layout before and after switching from the BEV priority mode to the traveling-direction priority mode. Fig. 5A and Fig. 5B illustrate another pattern before and after such switching, and Fig. 6A and Fig. 6B illustrate still another pattern before and after such switching.

For example, as shown in Fig. 4A, in the BEV priority mode, the BEV-display area 51 is set to occupy a larger space on the screen and the traveling-direction display area 52 is made smaller. After switching to the traveling-direction priority mode by the area adjustment unit 48, the BEV-display area 51 is made smaller and the traveling-direction display area 52 is made larger as shown in Fig. 4B. In this pattern, though both areas 51 and 52 do not disappear before and after switching to the traveling-direction priority mode, the size relation between both is reversed. Hence, this screen layout pattern allows the user to check the surrounding situation while checking both the traveling-direction image 31 and the BEV image 32 before and after switching to the traveling-direction priority mode. Displaying the traveling-direction image 31 facilitates understanding of the positional relationship between the vehicle 200 and the obstacle 29 or the parking position 36, which can eliminate anxiety.

In another pattern, only the BEV-display area 51 is secured in the BEV priority mode as shown in Fig. 5A. After switching to the traveling-direction priority mode by the area adjustment unit 48 as shown in Fig. 5B, the BEV-display area 51 is made smaller and the traveling-direction display area 52 is secured with a size larger than the BEV-display area 51.

In still another pattern, only the BEV-display area 51 is preserved in the BEV priority mode as shown in Fig. 6A. After switching to the traveling-direction priority mode by the area adjustment unit 48 as shown in Fig. 6B, the BEV-display area 51 disappears and only the traveling-direction display area 52 is kept appeared. One of these three switching patterns is selected depending on the vehicle type to which the parking system 100 is applied.

For example, when the obstacle proximity condition or the section proximity condition is satisfied in any one of these switching patterns, the area adjustment unit 48 switches the display mode from the BEV priority mode to the traveling-direction priority mode. The display field of view of the BEV image 32 is preferred to be remained same before and after resizing the BEV-display area 51. This is because the BEV image 32 allows the user to grasp the surrounding over a wide range.

The second distance, which defines the threshold for switching to the traveling-direction priority mode as the distance from the vehicle 200 to the parking section 38, is preferably set to a value longer than the first distance that defines the threshold for switching to the traveling-direction priority mode as the distance from the vehicle 200 to the obstacle 29. This is because, once the vehicle 200 approaches the parking section 38, the range of the subsequent movement of the vehicle 200 becomes smaller and thus the need for display in the BEV priority mode is reduced. Consequently, when the vehicle 200 approaches the parking section 38, the display on the monitor 24 switches to the traveling-direction priority mode before the distance between the vehicle 200 and the obstacle 29 becomes equal to or shorter than the second distance, and such switching of the display mode enables the user to recognize the obstacle 29 near the parking position 36 slightly earlier.

Note that each of the first distance and the second distance can be defined in an arbitrary manner and may be defined as distance different from the above-described distance within the detection range of the ultrasonic sensors 23.

In order to enable the user to predict switching of the display mode, a turn-back mark line 39 is superimposed and displayed on the traveling-direction image 31. When the obstacle 29 reaches the turn-back mark line 39, the traveling direction Ω of the vehicle 200 is reversed and the display mode of the BEV image 32 is switched to the traveling-direction priority mode.

If the display mode is switched to the traveling-direction priority mode more often than necessary, the user may feel inconvenient. Thus, the action to ensure that the timing of switching to the traveling-direction priority mode is not preferred to be too early. For example, even in the case where a certain structure enters the detection range 33 of the ultrasonic sensors 23, when the structure is not the obstacle 29 by which the vehicle 200 is required to turn back, there is little need to switch to traveling-direction priority mode at an early stage.

For this reason, preferably, the condition holding unit 49 further holds an "obstacle condition for turn-back" defining that the obstacle 29 is an object requiring the vehicle 200 to reverse its traveling direction. The area adjustment unit 48 preferably continues the BEV priority mode when the obstacle condition for turn-back is not satisfied, regardless of whether the obstacle proximity condition is satisfied or not. Imposing the obstacle condition for turn-back can restrict the switching from the BEV priority mode to the traveling-direction priority mode to only the cases where there is a great need for the user to check the situation. However, in the case where the obstacle 29 does not satisfy the obstacle condition for turn-back, when the obstacle 29 to the vehicle 200 is within a third distance shorter than the second distance from the vehicle 200, the display mode may be switched to the traveling-direction priority mode.

### <3. Automatic Parking Assistance Method>

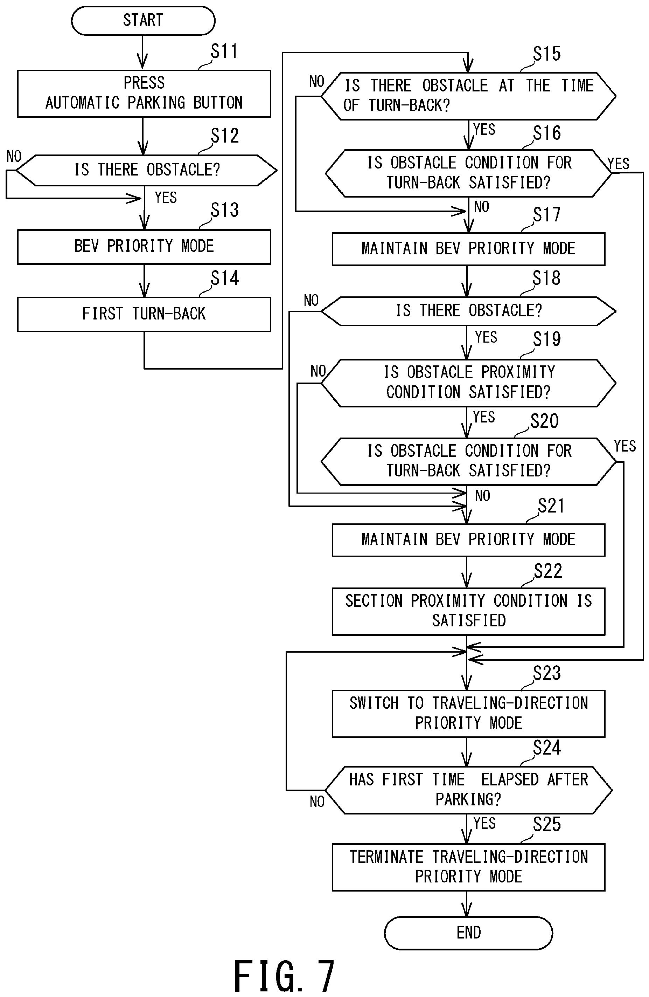

Next, the automatic parking assistance method according to the first embodiment of the present invention will be described by referring to the flowchart of Fig. 7. In addition to the display operation in the automatic parking, the flowchart also shows the operation on the user side in order to facilitate understanding. In the following, a description will be given of the case where the traveling direction Ω is reversed at least once (in the step S14).

In the first step S11, the driver presses the automatic parking button and starts the automatic parking under the control of the parking system 100.

When the vehicle 200 enters a parking lot of a large store or a public parking lot, many vehicles may be already parked as the obstacles 29. Near the entrance of the parking lot, fences and utility poles are provided in some cases, and the vehicle 200 may approach these structures depending on the situation. In this manner, at the start of the automatic parking, at least one obstacle 29 satisfying the obstacle proximity condition may already exist.

At the time of entering the parking lot, however, the distance from the vehicle 200 to the parking position 36 is long, and thus, the traveling distance of the vehicle 200 after the entering is usually large. In such a case, if the BEV priority mode is switched to the traveling-direction priority mode because of existence of the obstacle 29 that satisfies the obstacle proximity condition, the driver has to drive long distance while monitoring the surroundings with a narrowed field of view. As described above, if the display mode is switched to the traveling-direction priority mode at the timing when the user does not need to check and understand the surrounding in detail, the user may feel inconvenient. For this reason, the BEV priority mode is maintained until the traveling-direction priority mode is requested.

On the basis of the above-described policy, at the start of the automatic parking, regardless of existence/non-existence of the obstacle 29 (i.e., regardless of YES/NO in the step S12), at least the BEV image 32 is displayed in the BEV priority mode on the monitor screen 59 in the step S13.

In other words, from the start of the automatic parking, the area adjustment unit 48 continues the BEV priority mode until the first turn-back of the traveling direction Q, even the obstacle proximity condition is satisfied (steps S12 to S14).

When the vehicle 200 reaches the turning point of the traveling direction Ω calculated by the path calculation unit 44, in the step S14, the parking operation unit 45 turns back, i.e., reverses the traveling direction Ω for the first time.

At the time of this first turn-back, if there is no obstacle 29 around the vehicle 200 (No in the step S15), the processing proceeds to the step S17 in which the area adjustment unit 48 maintains the BEV priority mode.

At the time of this first turn-back, if the obstacle 29 exists (YES in the step S15) but this obstacle 29 does not satisfy the obstacle condition for turn-back (NO in the step S16), the processing proceeds to the step S17 in which the area adjustment unit 48 maintains the BEV priority mode.

At the time of this first turn-back, if the obstacle 29 exists (YES in the step S15) and this obstacle 29 satisfies the obstacle condition for turn-back (YES in the step S16), the processing proceeds to the step S23 in which the area adjustment unit 48 switches the display mode from the BEV priority mode to the traveling-direction priority mode. In terms of reducing the switching frequency of the display mode, after switching to the traveling-direction priority mode, it is preferred to continue the traveling-direction priority mode without switching back to the BEV priority mode until the completion or interruption of the automatic parking. The automatic parking of the vehicle 200 is performed by the parking operation unit 45 along the path calculated in advance by the path calculation unit 44. Accordingly, the movement range of the vehicle 200 after switching to the traveling-direction priority mode is considered to be small, and thus, the user's anxiety due to the traveling-direction priority mode is considered to be extremely limited.

After the step S17, if there is no obstacle 29 (NO in the step S18), the processing proceeds to the step S21 in which the BEV priority mode 32 is maintained.

If the obstacle 29 exists (YES in the step S18) but this obstacle 29 does not satisfy the obstacle proximity condition (NO in the step S19), the BEV priority mode is maintained in the step S21.

If the obstacle 29 exists (YES in the step S18), and the obstacle 29 satisfies the obstacle proximity condition (YES in the step S19) but does not satisfy the obstacle condition for turn-back (NO in the step S20), the BEV priority mode is maintained in the step S21.

Conversely, if this obstacle 29 satisfies both the obstacle proximity condition and the obstacle condition for turn-back (YES in both steps S19 and S20), the processing proceeds to the step S23 in which the BEV priority mode is switched to the traveling-direction priority mode.

After the step S21, when the vehicle 200 approaches the parking section 38, the section proximity condition is inevitably satisfied in the step S22, and then, the area adjustment unit 48 switches the display mode from the BEV priority mode to the traveling-direction priority mode in the step S23. In other words, regardless of whether the previous display mode is the BEV priority mode or the traveling-direction priority mode, when the vehicle 200 approaches the parking section 38, the BEV priority mode is switched to the traveling-direction priority mode.

Near the parking position 36, many of the obstacles 29 are more likely related to parking. Thus, displaying the enlarged surrounding with the traveling-direction image 31 near the parking position 36 allows the user to check details of the obstacle(s) 29 at the parking position 36 a little earlier.

This traveling-direction priority mode continues until the first time such as several seconds to several minutes' elapses from the timing when the vehicle 200 stops at the parking position 36 (i.e., if NO in the step S24, the processing returns to the step S23).

This is because, for a certain period of time immediately after stopping of the vehicle 200, the user usually needs to check the distance between the vehicle 200 and the nearby obstacle 29 in detail. If the first time which is predetermined elapses after the stop (YES in the step S24), the traveling-direction priority mode is terminated in the step S25. After terminating the traveling-direction priority mode, the display mode may be switched back to the BEV priority mode or the monitor screen 59 may be turned off. The timing of terminating the traveling-direction priority mode may be the timing at which the shift position is switched to be neutral, and the parking brake is applied, instead of the timing after elapse of the first time.

According to the assistance system 10 of the first embodiment described above, the BEV image 32 and the traveling-direction image 31 can be displayed in a timely and appropriate manner while enabling reduction in switching frequency of the display mode.

### (Second Embodiment)

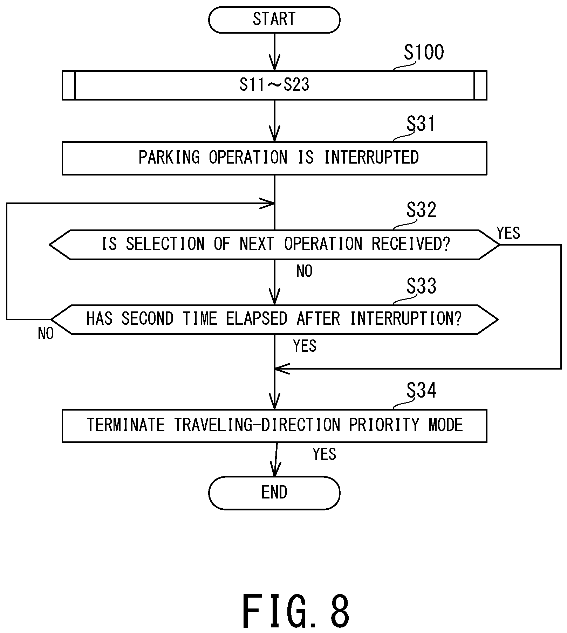

In the second embodiment, on the basis of the flowchart of Fig. 8, a description will be given of the operation procedure when the automatic parking is interrupted after display in the traveling-direction priority mode is performed.

Fig. 8 is a flowchart of the operation based on the automatic parking assistance method in the second embodiment.

The subroutine S100 in Fig. 8 refers to the processing from pressing of the automatic parking button in the step S11 to switching to the traveling-direction priority mode in the step S23 in the flowchart of Fig. 7. In other words, the second embodiment shows the operation when the automatic parking is interrupted after execution of display in the traveling-direction priority mode in the step S23 of the first embodiment.

The automatic parking may be interrupted by sudden appearance of the obstacle 29 or by the driver stepping on the braking device 12 during the automatic parking. The automatic parking is also interrupted when the vehicle 200 stops parking and changes its course to a new destination. In the second embodiment, a description will be given of the display mode on the monitor screen 59 in the case of having interruption in the automatic parking.

If the automatic parking is interrupted in the step S31, the parking operation unit 45 receives selection of the next operation from the user in the step S32. For example, selectable items for the next operation include: resumption of the automatic parking; automatic departure from the current position; automatic return for returning to the start position; and cancellation of the automatic parking.

If the parking operation unit 45 does not receive selection of the next operation after second time which is predetermined elapses from the start of the interruption (No in the step S32 and YES in the step S33), the processing proceeds to the step S34 in which the area adjustment unit 48 terminates the traveling-direction priority mode and switches the display mode to the BEV priority mode.

When the user selects the next operation, from the viewpoint of allowing the user to appropriately select the next operation in consideration of the surrounding , the BEV priority mode in which the BEV image 32 depicting a wide range is displayed in an enlarged manner is desirable. This is because the BEV image 32 facilitates grasping of the entire surrounding including the vehicle 200 and facilitates checking of the automatic departure position and/or the return position as compared with the traveling-direction image 31. If the next operation is not selected even after elapse of the second time, there is a possibility that the traveling-direction image 31 does not include the automatic departure position and/or the return position and the user is not aware of the position. For this reason, after elapse of the second time, the display mode is switched back to the BEV priority mode so that the user can grasp the wide-range surrounding including the vehicle 200. The second time is, for example, several tens of seconds to several minutes.

When the automatic parking is interrupted by the detection of the obstacle 29, the user often acts to grasp the positional relationship between the vehicle 200 and the obstacle 29. Hence, maintaining the traveling-direction priority mode during the second time enables the user to grasp the detailed positional relationship between the vehicle 200 and the adjacent obstacle 29 before getting off the vehicle 200.

If the parking operation unit 45 receives selection of the next operation (YES in the step S32), the processing proceeds to the step S34 in which the area adjustment unit 48 terminates the traveling-direction priority mode and switches the display mode to the BEV priority mode. The reason is as follows. If the next operation is selected, the vehicle 200 usually moves largely on the basis of the selected operation, and it becomes important to provide the BEV image 32 enabling the user to grasp the surrounding in a wide range.

The assistance system 10 and the parking system 100 according to the second embodiment operate in the same manner as those of the first embodiment, except the operation in the case of the automatic parking being interrupted. Hence, in Fig. 8, the same reference sign is given to the same step as those in Fig. 7, and duplicate description is omitted.

According to the assistance system 10 of the second embodiment described above, the display mode once switched to the traveling-direction priority mode can be switched back to the BEV priority mode at an appropriate timing. Thus, the user can grasp the surrounding in a wide range at appropriate timing.

### (Third Embodiment)

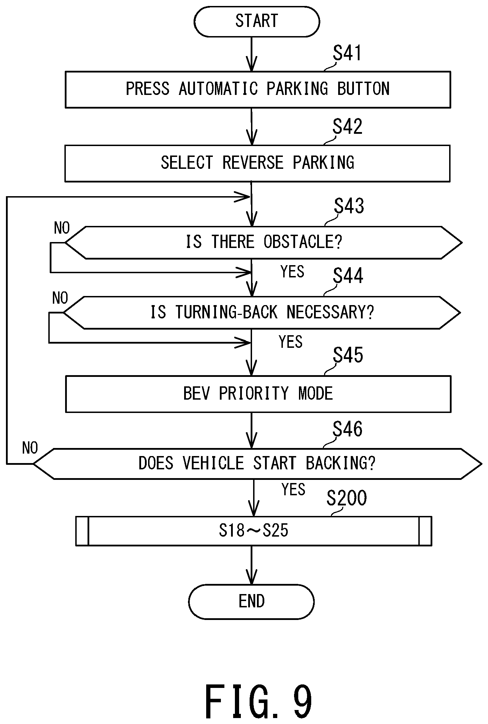

In the third embodiment, on the basis of the flowchart of Fig. 9, a description will be given of the operation procedure when the automatic parking is performed as reverse parking.

Fig. 9 is a flowchart of the operation by the automatic parking assistance method in the third embodiment.

The subroutine S200 in Fig. 9 is the processing from the branch depending on existence/non-existence of the obstacle 29 in the step S18 to the termination of the traveling-direction priority mode in the step S25 as shown in the flowchart of Fig. 7.

In the third embodiment, first, the driver presses the automatic parking button in the step S41, similarly to the operation described in the first embodiment.

At this time, parking the vehicle 200 in reverse is selected in the step S42. The determination of selecting the reverse parking may be made by the driver, the parking position setting unit 42, or the path calculation unit 44. Afterward, parking operation by the parking operation unit 45 is started.

In the case of parking the vehicle 200 in reverse, the display mode of the monitor 24 is set in the BEV priority mode regardless of existence/non-existence of the obstacle 29 (i.e., regardless of YES/NO in the step S43) and regardless of whether the vehicle 200 turns back (i.e., regardless of YES/NO in the step S44), until the vehicle starts to move backward for the reverse parking (i.e., until YES in the step S46).

What is difficult for the user to check is the surrounding behind the vehicle 200 during the reverse parking. Thus, in the third embodiment, in the case of a turn-back of the traveling direction that is not directly related to the reverse parking, the BEV priority mode is continued regardless of whether the obstacle proximity condition and/or the obstacle condition for turn-back are satisfied or not. In such manner, the user can check the BEV image 32 with a large size and grasp the surrounding with a wide field of view until the vehicle 200 starts to move backward for the reverse parking.

If the vehicle 200 starts to move backward (YES in the step S46), the processing proceeds to the subroutine S200 in which the display mode is switched to the traveling-direction priority mode.

In other words, after the vehicle 200 starts moving backward, if the obstacle proximity condition, the obstacle condition for turn-back, or the section proximity condition is satisfied, the display mode is switched to the traveling-direction priority mode in a timely manner by following the steps S18 to S25 of Fig. 7 (step S200, END).

Although a description has been given of the case where the obstacle 29 is detected by the ultrasonic sensors 23 in each embodiment, the position of the obstacle 29 may be specified by using AI technology from the images acquired by the surrounding cameras 22, for example.

## Claims

1. An automatic parking assistance system (10) comprising:
a traveling-direction display unit (46) configured to display a traveling-direction image (31) in a traveling-direction display area (52) on a monitor (24) inside a vehicle (200) having an autonomous driving function during automatic parking of the vehicle (200), the traveling-direction image (31) being a scenic image captured in a traveling direction of the vehicle (200);
a BEV-image display unit (47) configured to display a Bird's-Eye View image (32) in a BEV-display area (51) on the monitor (24), and the BEV image (32) being an image obtained by imaging surroundings of the vehicle (200) including the vehicle (200) itself and depicting the surroundings as viewed from above the vehicle (200);
a condition holding unit (49) configured to hold an obstacle proximity condition, a section proximity condition and a turn-back obstacle condition, the obstacle proximity condition defining that distance between the vehicle (200) and an obstacle (29) is equal to or shorter than predetermined first distance during the automatic parking, and the section proximity condition defining that distance between the vehicle (200) and a parking section (38) of a parking position (36) scheduled at a time of the automatic parking is equal to or shorter than predetermined second distance, and the turn-back obstacle condition defining that the obstacle (29) is an object requiring turn-back for the vehicle (200); and
an area adjustment unit 48 configured to switch a display operation of the monitor (24) between a BEV priority mode and a traveling-direction priority mode by adjusting size of each of the traveling-direction display area (52) and the BEV-display area (51), the BEV priority mode indicating that the BEV-display area (51) is wider than the traveling-direction display area (52), and the traveling-direction priority mode indicating that the traveling-direction display area (52) is wider than the BEV-display area (51),
wherein the area adjustment unit (48) is configured to switch the display operation of the monitor (24) from the BEV priority mode to the traveling-direction priority mode when at least one of the obstacle proximity condition and the section proximity condition is satisfied, and the area adjustment unit (48) is configured to continue the BEV priority mode when the turn-back obstacle condition is not satisfied, regardless of whether the obstacle proximity condition is satisfied.

2. The automatic parking assistance system (10) according to claim 1, wherein the area adjustment unit (48) is configured to continue the BEV priority mode before a first turn-back from start of the automatic parking, even when the obstacle proximity condition is satisfied.

3. The automatic parking assistance system (10) according to claim 1, wherein, when the automatic parking of the vehicle (200) is performed as reverse parking, the area adjustment unit (48) is configured to continue the BEV priority mode until backward movement of the reverse parking is started, regardless of whether at least one of the obstacle proximity condition and the section proximity condition is satisfied.

4. The automatic parking assistance system (10) according to claim 1, wherein, after switching to the traveling-direction priority mode, the area adjustment unit (48) is configured to continue the traveling-direction priority mode until a timing of completion or interruption of the automatic parking.

5. The automatic parking assistance system (10) according to claim 1, wherein the BEV priority mode indicates thatan image display screen of the monitor (24) solely includes the BEV-display area (51).

6. The automatic parking assistance system (10) according to claim 1, wherein the traveling-direction priority mode indicates that an image display screen of the monitor (24) solely includes the traveling-direction display area (52).

7. The automatic parking assistance system (10) according to claim 1, wherein, when the automatic parking is interrupted, the area adjustment unit (48) is configured to switch the display operation of the monitor (24) from the traveling-direction priority mode to the BEV priority mode after elapse of predetermined second time from start of interruption of the automatic parking.

8. The automatic parking assistance system (10) according to claim 1, wherein the predetermined second distance is longer than the predetermined first distance.

## Patentansprüche

1. Automatisches Parkassistenzsystem (10), umfassend:
eine Fahrtrichtung-Anzeigeeinheit (46), welche dazu eingerichtet ist, ein Fahrtrichtungsbild (31) in einem Fahrtrichtung-Anzeigebereich (52) auf einem Monitor (24) innerhalb eines Fahrzeugs (200), welches eine autonome Fahrfunktion aufweist, während des automatischen Parkens des Fahrzeugs (200) anzuzeigen, wobei das Fahrtrichtungsbild (31) ein Szenenbild ist, welches in einer Fahrtrichtung des Fahrzeugs (200) aufgenommen wird;
eine BEV-Bild-Anzeigeeinheit (47), welche dazu eingerichtet ist, ein Vogelperspektivbild (32) in einem BEV-Anzeigebereich (51) auf dem Monitor (24) anzuzeigen, und wobei das BEV-Bild (32) ein Bild ist, welches durch Aufnehmen der Umgebung des Fahrzeugs (200) umfassend das Fahrzeug (200) selbst erhalten wird und die Umgebung, von oben auf das Fahrzeug (200) gesehen, darstellt;
eine Bedingungseinhalteeinheit (49), welche dazu eingerichtet ist, eine Hindernisannäherungsbedingung, eine Abschnittannäherungsbedingung und eine Wendehindernisbedingung einzuhalten, wobei die Hindernisannäherungsbedingung definiert, dass ein Abstand zwischen dem Fahrzeug (200) und einem Hindernis (29) während des automatischen Parkens gleich wie oder kürzer als ein vorbestimmter erster Abstand ist, und wobei die Abschnittannäherungsbedingung definiert, dass ein Abstand zwischen dem Fahrzeug (200) und einem Parkabschnitt (38) einer Parkposition (36), welche zum Zeitpunkt des automatischen Parkens vorgesehen ist, gleich wie oder kürzer als ein vorbestimmter zweiter Abstand oder ist, und wobei die Wendehindernisbedingung definiert, dass das Hindernis (29) ein Objekt ist, welches ein Wenden des Fahrzeugs (200) erfordert; und
eine Bereichsanpassungseinheit (48), welche dazu eingerichtet ist, einen Anzeigebetrieb des Monitors (24) zwischen einem BEV-Prioritätsmodus und einem Fahrtrichtung-Prioritätsmodus umzuschalten, indem die Größe des Fahrtrichtung-Anzeigebereichs (52) und des BEV-Anzeigebereichs (51) jeweils angepasst wird, wobei der BEV-Prioritätsmodus angibt, dass der BEV-Anzeigebereich (51) breiter als der Fahrtrichtung-Anzeigebereich (52) ist, und wobei der Fahrtrichtung-Prioritätsmodus angibt, dass der Fahrtrichtung-Anzeigebereich (52) breiter als der BEV-Anzeigebereich (51) ist,
wobei die Bereichsanpassungseinheit (48) dazu eingerichtet ist, den Anzeigebetrieb des Monitors (24) von dem BEV-Prioritätsmodus in den Fahrtrichtung-Prioritätsmodus umzuschalten, wenn wenigstens eine der Hindernisannäherungsbedingung und der Abschnittannäherungsbedingung erfüllt ist, und wobei die Bereichsanpassungseinheit (48) dazu eingerichtet ist, den BEV-Prioritätsmodus beizubehalten, wenn die Wendehindernisbedingung nicht erfüllt ist, unabhängig davon, ob die Hindernisannäherungsbedingung erfüllt ist.

2. Automatisches Parkassistenzsystem (10) nach Anspruch 1, wobei die Bereichsanpassungseinheit (48) dazu eingerichtet ist, den BEV-Prioritätsmodus vor einem ersten Wenden ab Beginn des automatischen Parkens beizubehalten, selbst wenn die Hindernisannäherungsbedingung erfüllt ist.

3. Automatisches Parkassistenzsystem (10) nach Anspruch 1, wobei, wenn das automatische Parken des Fahrzeugs (200) als Rückwärtseinparken durchgeführt wird, die Bereichsanpassungseinheit (48) dazu eingerichtet ist, den BEV-Prioritätsmodus beizubehalten, bis eine Rückwärtsbewegung des Rückwärtseinparkens begonnen wird, unabhängig davon, ob wenigstens eine der Hindernisannäherungsbedingung und der Abschnittannäherungsbedingung erfüllt ist.

4. Automatisches Parkassistenzsystem (10) nach Anspruch 1, wobei die Bereichsanpassungseinheit (48) nach dem Umschalten in den Fahrtrichtung-Prioritätsmodus dazu eingerichtet ist, den Fahrtrichtung-Prioritätsmodus bis zu einem Zeitpunkt eines Abschlusses oder einer Unterbrechung des automatischen Parkens beizubehalten.

5. Automatisches Parkassistenzsystem (10) nach Anspruch 1, wobei der BEV-Prioritätsmodus angibt, dass ein Bildanzeigebildschirm des Monitors (24) ausschließlich den BEV-Anzeigebereich (51) umfasst.

6. Automatisches Parkassistenzsystem (10) nach Anspruch 1, wobei der Fahrtrichtung-Prioritätsmodus angibt, dass ein Bildanzeigebildschirm des Monitors (24) ausschließlich den Fahrtrichtung-Anzeigebereich (52) umfasst.

7. Automatisches Parkassistenzsystem (10) nach Anspruch 1, wobei, wenn das automatische Parken unterbrochen wird, die Bereichsanpassungseinheit (48) dazu eingerichtet ist, den Anzeigebetrieb des Monitors (24) nach Ablauf einer vorbestimmten zweiten Zeitdauer ab Beginn einer Unterbrechung des automatischen Parkens von dem Fahrtrichtung-Prioritätsmodus in den BEV-Prioritätsmodus umzuschalten.

8. Automatisches Parkassistenzsystem (10) nach Anspruch 1, wobei der vorbestimmte zweite Abstand länger als der vorbestimmte erste Abstand ist.

## Revendications

1. Système d'aide au stationnement automatique (10) comprenant :
une unité d'affichage de direction de déplacement (46) configurée pour afficher une image de direction de déplacement (31) dans une zone d'affichage de direction de déplacement (52) sur un moniteur (24) à l'intérieur d'un véhicule (200) ayant une fonction de conduite autonome pendant un stationnement automatique du véhicule (200), l'image de direction de déplacement (31) étant une image scénique capturée dans une direction de déplacement du véhicule (200) ;
une unité d'affichage d'image de BEV (47) configurée pour afficher une image en vue aérienne (32) dans une zone d'affichage de BEV (51) sur le moniteur (24), et l'image de BEV (32) étant une image obtenue par l'imagerie des environs du véhicule (200) y compris le véhicule (200) lui-même et représentant les environs tels qu'observés depuis le dessus du véhicule (200) ;
une unité de conservation de conditions (49) configurée pour conserver une condition de proximité d'obstacle, une condition de proximité de section et une condition d'obstacle de changement de sens, la condition de proximité d'obstacle définissant qu'une distance entre le véhicule (200) et un obstacle (29) est égale ou inférieure à une première distance prédéterminée pendant le stationnement automatique, et la condition de proximité de section définissant qu'une distance entre le véhicule (200) et une section de stationnement (38) d'une position de stationnement (36) programmée à un certain temps du stationnement automatique est égale ou inférieure à une deuxième distance prédéterminée, et la condition d'obstacle de changement de sens définissant que l'obstacle (29) est un objet nécessitant un changement de sens pour le véhicule (200) ; et
une unité de réglage de zone 48 configurée pour commuter une opération d'affichage du moniteur (24) entre un mode priorité à la BEV et un mode priorité à la direction de déplacement par le réglage de la taille de chacune parmi la zone d'affichage de direction de déplacement (52) et la zone d'affichage de BEV (51), le mode priorité à la BEV indiquant que la zone d'affichage de BEV (51) est plus large que la zone d'affichage de direction de déplacement (52), et le mode priorité à la direction de déplacement indiquant que la zone d'affichage de direction de déplacement (52) est plus large que la zone d'affichage de BEV (51),
dans lequel l'unité de réglage de zone (48) est configurée pour commuter l'opération d'affichage du moniteur (24) du mode priorité à la BEV au mode priorité à la direction de déplacement lorsqu'au moins une parmi la condition de proximité d'obstacle et la condition de proximité de section est satisfaite, et l'unité de réglage de zone (48) est configurée pour poursuivre en mode priorité à la BEV lorsque la condition d'obstacle de changement de sens n'est pas satisfaite, indépendamment du fait que la condition de proximité d'obstacle soit satisfaite ou non.

2. Système d'aide au stationnement automatique (10) selon la revendication 1, dans lequel l'unité de réglage de zone (48) est configurée pour poursuivre en mode priorité à la BEV avant un premier changement de sens depuis le début du stationnement automatique, même lorsque la condition de proximité d'obstacle est satisfaite.

3. Système d'aide au stationnement automatique (10) selon la revendication 1, dans lequel, lorsque le stationnement automatique du véhicule (200) est réalisé comme un stationnement en marche arrière, l'unité de réglage de zone (48) est configurée pour poursuivre en mode priorité à la BEV jusqu'à ce que le mouvement vers l'arrière du stationnement en marche arrière débute, indépendamment du fait qu'au moins une parmi la condition de proximité d'obstacle et la condition de proximité de section soit satisfaite.

4. Système d'aide au stationnement automatique (10) selon la revendication 1, dans lequel, après la commutation vers le mode priorité à la direction de déplacement, l'unité de réglage de zone (48) est configurée pour poursuivre en mode priorité à la direction de déplacement jusqu'à un instant d'achèvement ou d'interruption du stationnement automatique.

5. Système d'aide au stationnement automatique (10) selon la revendication 1, dans lequel le mode priorité à la BEV indique qu'un écran d'affichage d'image du moniteur (24) comporte uniquement la zone d'affichage de BEV (51).

6. Système d'aide au stationnement automatique (10) selon la revendication 1, dans lequel le mode priorité à la direction de déplacement indique qu'un écran d'affichage d'image du moniteur (24) comporte uniquement la zone d'affichage de direction de déplacement (52).

7. Système d'aide au stationnement automatique (10) selon la revendication 1, dans lequel, lorsque le stationnement automatique est interrompu, l'unité de réglage de zone (48) est configurée pour commuter l'opération d'affichage du moniteur (24) du mode priorité à la direction de déplacement au mode priorité à la BEV après l'écoulement d'un deuxième temps prédéterminé depuis le début de l'interruption du stationnement automatique.

8. Système d'aide au stationnement automatique (10) selon la revendication 1, dans lequel la deuxième distance prédéterminée est plus longue que la première distance prédéterminée.
